# EUROPÄISCHE PATENTANMELDUNG

(11) **EP 1 256 609 A2**
(43) Veröffentlichungstag der Anmeldung: **13.11.2002**
(21) Anmeldenummer: 02008989.2
(22) Anmeldetag: 23.04.2002
(51) Int. Cl.: C09D 11/02, C09K 11/00

(54) **Lumineszierende Flexodruckfarbe zum Drucken von Steuermarkierungen**

(30) Priorität: 09.05.2001 DE 10122529
(71) Anmelder: BASF Drucksysteme GmbH, 70469 Stuttgart (DE); Süddekor Druckerei GmbH & Co. KG, 89146 Laichigen (DE)
(72) Erfinder: Hirschmann, Herbert, 77704 Oberkirch (DE); Schweizer, Guido, 89188 Merklingen (DE); Pohé, Jorg, Dr., 89150 Laichingen (DE)
(74) Vertreter: Poganiuch, Peter

(57) **Zusammenfassung**

Lumineszierende Flexodruckfarbe zum Drucken von Steuermarkierungen, die eine Kombination aus einem Licht streuenden Pigment und einem optischen Aufheller umfasst und die nicht deckend ist. Verwendung der lumineszierenden Flexodruckfarbe zum Drucken von Steuermarkierungen und Barcodes sowie zur Herstellung von Dekorpapieren, Holzlaminaten und Fußbodenpaneelen.

## Beschreibung

Die vorliegende Erfindung betrifft eine lumineszierende Flexodruckfarbe zum Drucken von Steuermarkierungen, die eine Kombination aus einem Licht streuenden Pigment und einem optischen Aufheller umfasst und die nicht deckend ist. Die Erfindung betrifft weiterhin die Verwendung der lumineszierenden Flexodruckfarbe zum Drucken von Steuermarkierungen und Barcodes sowie zur Herstellung von Dekorpapieren, Holzlaminaten und Paneelen.

Dekorpapiere zur Herstellung bzw. Veredelung von Werkstoffen auf Holzbasis sind prinzipiell bekannt. Dekorpapiere werden hergestellt, indem man weiße oder eingefärbte Spezialpapiere im Tiefdruckverfahren mit geeigneten Dekoren bedruckt. Als Motive weit verbreitet sind Holzmaserungen; daneben werden aber auch Stein-, Keramik-, Kork- oder reine Fantasie-Dekore gedruckt.

Zur Herstellung von Laminaten werden die erhaltenen Dekorpapiere mit Tränkharzen wie bspw. Melamin-Formaldehyd-Harzen getränkt und schließlich unter Druck und Temperatur auf geeignete Trägermaterialien, wie bspw. Spanplatten oder hoch- bzw. mittelverdichtete Faserplatten laminiert. Auf das Dekorpapier kann noch ein so genanntes Overlay-Papier zum Schutz des Schichtenverbundes laminiert werden. Dies ist vor allem der Herstellung von Fußbodenlaminaten üblich. Weitere Einzelheiten zur Herstellung derartiger Laminate sind beispielsweise dargestellt in "Ullmann's Encyclopedia of Industrial Chemistry, 6th Edition, Electronic Release: Wood 2.4.3.3. "Decorative Laminates"" oder auch in US 4,552,792 und US 4,587,141.

Die erhaltenen Laminate werden u.a. in der Bau- und Möbelindustrie weiter verarbeitet. Sie können beispielsweise zu Paneelen, insbesondere zu Fußbodenpaneelen für Laminatfußböden weiter verarbeitet werden. Hierzu werden große Laminat-Platten mittels spezieller Vielblattsägen in Streifen gesägt. Wesentlich ist die genaue Ausrichtung der Laminatplatten entlang der gewünschten Sägerichtung. Einerseits müssen Paneelen mit exakter Passung erhalten werden, und weiterhin soll der Sägeschnitt immer in gleicher Position bezüglich des Musters, beispielsweise stets parallel zu Holzmaserung, erfolgen. Zur genauen Positionierung während des Sägevorganges können die Platten beispielsweise auf einem ausrichtbaren Sägetisch gelagert werden. Die Steuerung der Säge bzw. des Sägetisches erfolgt üblicherweise mittels schwarzer Markierlinien, die mit Hilfe von Kontrastdetektoren (Hell-/Dunkel-Detektoren) erkannt werden können. Das vom Detektor erzeugte Signal wird zu zur Steuerung der Sägevorrichtung verwendet.

Die besagten schwarzen Markierlinien zur Steuerung der Säge befinden sich üblicherweise auf dem Dekorpapier, welches zur Herstellung des Laminats verwendet wurde. Sie werden bei der Produktion des Dekorpapiers mittels eines dem Tiefdruckwerk nachgeschalteten Flexodruckwerkes direkt auf das Dekorpapier aufgedruckt. Anschließend wird das Dekorpapier mit den aufgedruckten Markierlinien zum Laminat verarbeitet. Das erhaltene Laminat wird wie geschildert in Streifen gesägt. Der Sägeschnitt erfolgt genau entlang der Markierlinien, so dass diese "weggesägt" werden und auf den erhaltenen Paneelen keinerlei Markierlinien mehr zu sehen sind. Die kombinierte Tief-/Flexodrucktechnik hat den großen Vorteil, dass auf einfache Art und Weise Paneele in verschiedensten Breiten bei ansonsten gleichem Dekor gefertigt werden können. Für ein bestimmtes Holzmuster wird nur ein Satz von teuren Tiefdruckzylindern benötigt. Steuermarkierungen zum Sägen können mit vergleichsweise billigen Flexodruckzylindern individuell je nach der gewünschten Breite und Länge der Paneelen aufgedruckt werden.

Bei der Durchführung des Verfahrens zur Herstellung von Paneelen sieht sich der Fachmann jedoch mit einer Reihe von Problemen konfrontiert.

Bei dunklen Holztönen bzw. Dekoren reicht der Kontrast zu den schwarzen Markierlinien häufig nicht mehr aus, um eine störungsfreie Erkennung der Markierlinie durch den Detektor zu gewährleisten. Die Sägesteuerung folgt dann gelegentlich nicht mehr den Markierlinien, sondern der Holzmaserung. Hohe Ausschussquoten sind die Folge.

Zur Lösung dieses Problems ist bekannt, in den Tiefdruckzylindern Aussparungen vorzusehen, so dass das Papier an bestimmten Stellen überhaupt nicht bedruckt wird. Auf diese Art und Weise entstehen auf dem Dekorpapier papierfarbene Linien. Das Verfahren ist aber extrem unwirtschaftlich, weil für jede gewünschte Paneelenbreite ein eigener, vergleichsweise teurer Tiefdruckzylindersatz gefertigt werden muss.

Weiterhin ist zu berücksichtigen, dass eine Steuermarkierung auf dem Dekorpapier den Prozess der Laminierung unbeschädigt überstehen muss. Zur Laminierung können in übliceh Laminierpressen Drücke von bis zu 30 bar, in speziellen Hochdruckpressen bis zu 120 bar erreicht werden und die Temperaturen können bis zu 180°C betragen. Auch bei der Imprägnierung des Papiers mit dem Tränkharz in der Imprägniermaschine wird das Papier mechanisch beansprucht. Sehr dicke Farbschichten können bei dieser Beanspruchung abplatzen und zu unerwünschtem Abrieb führen, wodurch Laminate mit verunreinigter Oberfläche entstehen. Markierlinien dürfen daher nur dünn gedruckt werden. Durch verunreinigte Oberflächen und unsauber gedruckte Markierlinien kann auch die Lesbarkeit der Markierlinien beeinträchtigt werden. Hierbei ist zu bedenken, dass die Markierlinien auch durch die Tränkharzschicht und gegebenenfalls durch ein Overlay-Papier hindurch noch lesbar sein müssen.

Derartige Probleme treten insbesondere bei der Verwendung weißer Markierlinien auf. Zwar kann der Kontrast auf dunklem Untergrund prinzipiell durch weiße Markierlinien erhöht werden, aber um einen ausreichenden Kontrast zu erzielen, muss relativ viel Farbe eingesetzt werden. Durch zu hohen Farbübertrag treten aber Quetschränder an den Rändern der Markierlinien auf. Diese können wie geschildert im Zuge der weiteren Verfahrensschritte abplatzen. Für weiße Markierlinien in der erforderlichen hohen Qualität muss deswegen mehrfach dünn übereinander gedruckt werden, was die Wirtschaftlichkeit des Verfahrens stark beeinträchtigt.

Schließlich ist das Problem des Druckens von Steuermarkierungen auf Dekorpapiere, die sowohl helle wie dunkle Bereiche aufweisen, bislang völlig ungelöst.

Im Stand der Technik sind auch oberflächlich aufgebrachte lumineszierende Markierungen bekannt, die mit sogenannten Lumineszenztastern gelesen werden können. Lumineszenztaster emittieren UV-Licht. Die UV-Strahlung regt einen fluoreszierenden Stoff an, der wiederum Strahlung im sichtbaren Bereich emittiert, die vom Lumineszenztaster detektiert werden kann. In dünner Schicht auf Dekorpapiere mit dunklen Holztönen aufgebrachte Lumineszenzmarkierungen sind jedoch nur schwer detektierbar.

Aufgabe der vorliegenden Erfindung war es daher, eine geeignete Flexodruckfarbe zum Drucken von Steuermarkierungen auf Dekorpapieren bereitzustellen, die in dünner Schicht sowohl auf hellen wie auf dunklen Untergründen gut zu detektieren ist, um somit ein wirtschaftliches Verfahren zur Herstellung von Paneelen zu ermöglichen.

Dementsprechend wurde eine lumineszierende Flexodruckfarbe zum Drucken von Steuermarkierungen gefunden, die eine Kombination aus einem Licht streuenden Pigment und einem optischen Aufheller umfasst und die nicht deckend ist. Weiterhin wurde die Verwendung der lumineszierenden Flexodruckfarbe zum Drucken von Steuermarkierungen und Barcodes sowie zur Herstellung von Dekorpapieren, Holzlaminaten und Paneelen gefunden.

Die erfindungsgemäße Druckfarbe sowie das damit bedruckte Dekorpapier tragen in hervorragender Art und Weise zur Prozesssicherheit und somit zur wirtschaftlichen Produktion von Paneelen, insbesondere Fußbodenpaneelen, mit beliebigen Dekorschichten.

Das Licht streuende Pigment wird nur in begrenzten Mengen eingesetzt, so dass die Druckfarbe nicht deckend und der Untergrund durch die Druckfarbe hindurch noch zu erkennen ist. Im Regelfalle wirkt die Schicht nur leicht trübe. Besonders überraschend und unerwartet war die Tatsache, dass durch die Kombination eines Licht streuenden Pigmentes mit einem optischen Aufheller die Lesbarkeit der Markierung mit einem Lumineszenzdetektor erheblich verbessert wird. Durch das synergistische Zusammenwirken von optischem Aufheller mit einem Licht streuenden Pigment sind die mit der erfindungsgemäßen Druckfarbe gedruckten Markierungen mit Luminenszenzdetektoren sowohl auf hellen wie auf dunklen Untergründen auch durch eine gegebenenfalls vorhandene Overlay-Schicht hindurch sicher lesbar.

Der Zusatz des Licht streuenden Pigmentes hat weiterhin den Vorteil, dass während des Druckens des Dekorpapiers und während des ersten Anschnitts des Laminats visuelle Qualitätskontrolle wie bei einer konventionellen Druckfarbe möglich ist. So kann ohne großen Aufwand kontrolliert werden, ob das Drucken von Markierungen tatsächlich einwandfrei erfolgt ist und keine Aussetzer auftreten.

Tests mit der erfindungsgemäßen Flexodruckfarbe ergaben eine deutliche Verringerung der Ausschussquote bei der Herstellung von Paneelen unter Verwendung der besagten Farbe. Seitens der apparativen Ausstattung ist beim Einsatz der Druckfarbe nur der Austausch der Kontrast-Detektoren der Sägen durch handelsübliche Luminenszenzdetektoren erforderlich.

Zu der Erfindung ist im Einzelnen das Folgende auszuführen.

Die erfindungsgemäße Flexodruckfarbe umfasst in bekannter Art und Weise ein Lösemittel oder ein Lösemittelgemisch. Prinzipiell können die für Flexodruckfarben üblichen Lösemittel eingesetzt werden. Bevorzugt umfasst die erfindungsgemäße Flexodruckfarbe als Lösemittel Wasser oder ein überwiegend wässriges Lösemittelgemisch. Bei weiteren Komponenten überwiegend wässriger Lösungsmittelgemische kann es sich beispielsweise um Alkohole handeln. Die Menge des Lösungsmittels bzw. Lösungsmittelgemisches beträgt üblicherweise 50 bis 80 Gew. % Lösemittel bezüglich der Summe aller Bestandteile der Druckfarbe.

Als Bindemittel für die erfindungsgemäße Flexodruckfarbe können die für Flexodruckfarben üblichen Bindemittel eingesetzt werden. Insbesondere werden in Wasser oder wässrigen Lösungsmittelgemischen lösliche oder dispergierbare Bindemittel eingesetzt. Beispiele geeigneter Bindemittel umfassen wäßrige Dispersionen von aromatischen bzw. aliphatischen Polyurethanen, Casein bzw. Casein-Derivate, Polyvinylalkohole oder Polyvinylalkoholderivate, Polymere und Copolymere von Acrylsäure bzw. Acrylsäurederivaten, wie bspw. Acrylaten. Es können aber auch organisch lösliche Bindemittel eingesetzt werden. Der Fachmann trifft unter den prinzipiell möglichen Bindemitteln eine geeignete Auswahl. Als Bindemittel bevorzugt sind Casein bzw. Casein-Derivate. Es können selbstverständlich auch Gemische verschiedener polymerer Bindemittel eingesetzt werden, vorausgesetzt, die ausgewählten Bindemittel weisen in Kombination miteinander keine unerwünschten Eigenschaften auf. Die Menge aller Bindemittel beträgt üblicherweise 5 - 20 Gew. % bzgl. der Summe aller Bestandteile der Druckfarbe.

Als erfindungswesentliche Merkmale umfasst die Druckfarbe eine Kombination von mindestens einem Licht streuenden Pigment mit einem mindestens einem optischen Aufheller, mit der weiteren Maßgabe, dass das Licht streuende Pigment nur in einer solchen Menge eingesetzt wird, dass die Druckfarbe nicht deckend ist.

Bei den Licht streuenden Pigmenten handelt es sich im Regelfalle um solche Pigmente, deren Partikelgröße größer ist, als die Wellenlänge des sichtbaren Lichtes, insbesondere solche mit einer Partikelgröße > 400 nm. Bei runden oder annähernd runden Partikeln bezieht sich die Angabe der Partikelgröße auf den Durchmesser, bei unregelmäßig geformten, wie bspw. bei nadelförmigen Partikeln auf die längste Achse. Es kann sich aber auch um Pigmente mit geringerer Primärpartikelgröße handeln, die aber in Form größerer Agglomerate in der Druckfarbe verteilt sind. Beispiele geeigneter Licht streuender Pigmente sind anorganische Pigmente wie Titandioxid-Pigmente, Zinksulfid-Pigmente, Eisenoxidpigmente, Wismutvanadat-Pigmente. Es können aber auch geeignete organische Pigmente eingesetzt werden. Bevorzugt werden in der erfindungsgemäßen Druckfarbe Weißpigmente, wie bspw. TiO₂oder ZnS-Pigmente eingesetzt, besonders bevorzugt TiO₂-Pigmente. Es können selbstverständlich auch Gemische verschiedener Licht streuender Pigmente eingesetzt werden. Die Menge der Farbmittel beträgt üblicherweise 5 bis 20 Gew. % bezüglich der Summe aller Bestandteile.

Bei den optischen Aufhellern handelt es sich in bekannter Art und Weise um farblose oder leicht gefärbte organische Verbindungen, die im UV-Bereich absorbieren und das meiste des absorbierten UV-Lichtes als blaues Fluoreszenzlicht mit Wellenlängen zwischen 400 und 500 nm wieder emittieren. Lumineszenzdetektoren senden UV-Licht aus und können das resultierende Fluoreszenzlicht detektieren. Beispiele geeigneter optischer Aufheller umfassen Distyrylbenzole, Distyrylbiphenyle, Stilben-Derivate, wie bspw. Divinylstilbene, Triazinylaminostilbene, Stilbenyl-2H-triazole, Stilbenyl-2H-naphtol[1,2-d]triazole, Bis(1,2,3-triazolyl)silbene, die jeweils noch weiter substituiert sein können. Weitere Beispiele umfassen Benzoxazole, Stilbenylbenzoxazole, Bisbenzoxazole, Benzimidazol-Derivate, Pyrazolin-Derivate oder Coumarin-Derivate. Optische Aufheller sind kommerziell beispielsweise unter den Namen Blankophor®, Tinopal® oder Ultraphor® erhältlich. Es können auch Gemische verschiedener optischer Aufheller eingesetzt werden. Die Menge der eingesetzten optischen Aufheller beträgt üblicherweise 1 bis 25 Gew. % bzgl. der Summe aller Bestandteile.

Die erfindungsgemäße Flexodruckfarbe zum Drucken von Steuermarkierungen weist nur eine begrenzte Menge des Licht streuenden Pigmentes auf und ist nicht deckend, d.h. der Untergrund ist noch durch die gedruckte und getrocknete Druckfarbenschicht hindurch zu erkennen. Das Deckvermögen der Druckfarbe kann in üblicher Art durch Bestimmung der Transmission I/I₀ oder der Opazität I₀/I bestimmt werden. Bevorzugt erscheint die Schicht leicht streuend oder etwas milchig. Im Regelfalle weist die erfindungsgemäße Druckfarbe eine Transmission von 70 - 95 % im sichtbaren Bereich des optischen Spektrums auf.

Die erfindungsgemäße Druckfarbe kann optional weitere druckfarbentypische Additive und Hilfsstoffe umfassen. Beispiele für Additive und Hilfsstoffe sind Wachse zur Erhöhung der Abriebfestigkeit und zur Erhöhung der Gleitfähigkeit, wie bspw. Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureester oder Ester der Adipinsäure. Zum Dispergieren der Pigmente können Dispergierhilfsmittel eingesetzt werden. Die Gesamtmenge aller Additive und Hilfsstoffe übersteigt üblicherweise nicht 20 Gew. % bezüglich der Summe aller Bestandteile und beträgt bevorzugt 0 - 10 Gew. % .

Die Herstellung der erfindungsgemäßen Flexodruckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten hergestellt, die später mit weiteren Bestandteilen und weiterem Lösemittel zur fertigen Druckfarbe weiter verarbeitet wird.

Die erfindungsgemäße Flexodruckfarbe kann zum Drucken von Steuermarkierungen aller Art verwendet werden. Diese sind mit Lumineszenzdetektoren lesbar. Die Druckfarbe kann auch zum Drucken von Barcodes verwendet werden. Das begrenzte Deckvermögen ermöglicht eine vergleichsweise unauffällige Codierung von Gegenständen, ohne dass die Markierung völlig unsichtbar wäre.

Insbesondere wird die erfindungsgemäße Druckfarbe zum Herstellen von Dekorpapieren verwendet. Derartige Dekorpapiere umfassen eine auf einem Trägermaterial aus Papier aufgebrachte Dekorschicht. Der Fachmann trifft aus der Vielzahl von Papiertypen je nach den gewünschten Eigenschaften und der Verwendung des Dekorpapiers eine geeignete Auswahl. Die Dekorschicht wird üblicherweise mittels Tiefdruck aufgebracht, die Erfindung umfasst aber selbstverständlich, auch andere Drucktechniken anzuwenden. Auf die Dekorschicht werden direkt oder indirekt unter Verwendung der erfindungsgemäßen lumineszierenden Flexodruckfarbe Steuermarkierungen aufgebracht. Als Steuermarkierungen können beispielsweise Striche, durchgehende Linien, Punkte, Kreise o.ä. gedruckt werden. Je nach dem Anwendungszweck wählt der Fachmann die jeweils geeignete Form einer Steuermarkierung. Für den Einsatz des Dekorpapiers zur Herstellung von Fußbodenpaneelen haben sich in der gewünschtem Breite der Paneelen parallel angeordnete, durchgehende Linien bewährt. Bevorzugt werden die Steuermarkierungen mittels Flexodrucktechnik aufgebracht, die Erfindung umfasst aber selbstverständlich, auch andere Techniken einzusetzen.

Zum Drucken auf Dekorpapier besonders bewährt hat sich Casein oder ein Casein-Derivat als Bindemittel bzw. eines der Bindemittel der Flexodruckfarbe. Es vermittelt einerseits eine gute Haftung auf dem mit der Dekorschicht bedruckten Papier und erlaubt dennoch eine gute Durchdringung des gesamten Papiers mit dem Tränkharz. Das erfindungsgemäße Dekorpapier kann optional auch noch weitere Schichten umfassen, die durch Drucken oder Beschichten aufgebracht wurden.

Die erfindungsgemäße Flexodruckfarbe kann zum Herstellen von Holzlaminaten und Paneelen verwendet werden, indem zunächst ein Dekorpapier mit Steuermarkierungen hergestellt wird, und das erhaltene Dekorpapier mit den aufgedruckten, lumineszierenden Steuermarkierungen in üblicher Art und Weise mit Tränkharzen zu Holzlaminaten und Paneelen verarbeitet werden. Diese können in der Bau- und Möbelindustrie weiter verarbeitet werden. Weniger bevorzugt, aber natürlich prinzipiell möglich ist es, die Steuermarkierungen erst nach dem Laminieren auf die Oberfläche des Laminates aufzubringen.

Die Verarbeitung der Holzlaminate zu Fußbodenpaneelen kann mit den üblichen, im Stand der Technik bekannten Vielblattsägen erfolgen. Zur Durchführung des Verfahrens werden die Sägen mit Lumineszenzdetektoren ausgerüstet. Die Lumineszenzdetektoren detektieren die erfindungsgemäße Druckfarbe, und mit den erhaltenen Signalen wird der Sägetisch zur genauen Ausrichtung des Sägeschnitts gesteuert.

Die folgenden Beispiele sollen die Erfindung näher erläutern:

### Beispiel 1: Herstellung der Druckfarbe

Es wurden die in Tabelle 1 angegebenen Ausgangsstoffe eingesetzt. Die Bestandteile inklusive des Lösungsmittels wurden zusammengegeben und mittels eines konventionellen Mischers intensiv gemischt und homogenisiert. Es wurde eine leicht milchig aussehende Flexodruckfarbe erhalten.

### Beispiel 2:

Es wurde wie in Beispiel 1 vorgegangen, nur wurden die in Tabelle 2 angegebenen Komponenten eingesetzt. Es wurde eine leicht milchig aussehende Flexodruckfarbe erhalten.

**Tabelle 1:**

| Mengen der Ausgangsstoffe für Versuch 1. Die Mengenangaben beziehen sich auf die Summe aller Bestandteile. | | |
|---|---|---|
| Komponente | | Menge [Gew. %] |
| Bindemittel | Casein | 7 % |
| | Acrylat/Acrylsäure-Copolymeres | 1,5 % |
| Licht streuendes Pigment | Rutil-Pigment | 15 % |
| optischer Aufheller | Diaminostilbendisulfonsäure (Tinopal ABP) | 18 % |
| Lösemittel | Wasser | 57,5 % |

**Tabelle 2:**

| Mengen der Ausgangsstoffe für Versuch 2. Die Mengenangaben beziehen sich auf die Summe aller Bestandteile. | | |
|---|---|---|
| Komponente | | Menge [Gew. %] |
| Bindemittel | Casein | 5 % |
| | Acrylat/Acrylsäure-Copolymeres | 1,5 % |
| | PU-Harz | 2 % |
| Licht streuendes Pigment | Rutil-Pigment | 15 % |
| optischer Aufheller | Diaminostilbendisulfonsäure (Tinopal ABP) | 18 % |
| Lösemittel | Wasser | 58,5 % |

### Beispiel 3:

### Herstellung von Dekorpapier

Ein Trägerpapier wurde mittels eines Tiefdruckwerkes mit einer dunklen Holzdekorschicht bedruckt. Anschließend wurden mit einem nachgeschalteten Flexodruckwerk durchgehende parallele Linien mittels der in Beispiel 1 erhaltenen Druckfarbe aufgedruckt. Nach dem Trocknen wurde ein Dekorpapier erhalten, welches im wesentlichen transparente, leicht milchig wirkende parallele Linien aufwies.

### Beispiel 4:

Es wurde wie in Beispiel 3 vorgegangen, nur wurde die in Beispiel 2 hergestellte Druckfarbe eingesetzt. Nach dem Trocknen wurde ein Dekorpapier erhalten, welches im wesentlichen transparente, leicht milchig wirkende parallele Linien aufwies.

### Beispiele 5 und 6:

### Weiterverarbeitung des Dekorpapieres

Die in den Beispielen 3 und 4 erhaltenen Dekorpapiere wurden jeweils mittels eines Melamin-Formaldehyd-Harzes auf eine hochverdichtete Faserplatte unter zusätzlicher Verwendung eines Overlay-Papieres in einer Laminierpresse auflaminiert. Die auf das Dekorpapier aufgedruckten Steuermarkierungen waren mit einem Lumineszenzdetektor trotz der Tränkharzschicht gut zu detektieren und auch mit bloßem Auge gut zu erkennen.

Die erhaltenen Laminat-Platten wurden jeweils in eine Vielblattsäge mit beweglichem Sägetisch eingelegt. Die Vielblattsäge war mit Lumineszenzdetektoren ausgerüstet. Die Laminat-Platte wurde jeweils entlang der Steuermarkierungen in parallele Streifen gesägt. Abweichungen von der Sägerichtung traten keine auf. Alle erhaltenen Paneelen wiesen die gleichartige Muster in korrekter Anordnung auf.

### Vergleichsbeispiel :

Zum Drucken der Steuermarkierungen auf dem mit einem dunklen Holzdekor bedruckten Dekorpapier wurde eine konventionelle schwarze Markierungsfarbe eingesetzt. Das Dekorpapier wurde wie in Beispiel 5 beschrieben verarbeitet. Zum Sägen wurde eine mit Kontrastdetektoren ausgestattete Vielblattsäge eingesetzt. Die Sägeblätter folgten teilweise nicht der Steuermarkierung sondern der Holzmaserung. Es wurden Paneelen minderer Qualität erhalten, die nicht alle eine gleichartige, geometrisch korrekte Anordnung des Musters aufwiesen.

### Beispiel 7:

Es wurde eine Druckfarbe wie in Beispiel 1 beschrieben hergestellt, auf ein Dekorpapier mit dunkelbraunem Holzdekor mittels Flexodrucktechnik verdruckt, und anschließend wurde das Dekorpapier mit einem Melamin-Formaldehyd-Harz zu einem Laminat verarbeitet. Zum Flexodruck wurde einmal eine grobe Rasterwalze (48 lpc, hoher Farbübertrag) und einmal eine feine Rasterwalze eingesetzt (120 lpc, geringerer Farbübertrag). Es wurde jeweils das Reflexionsvermögen des gesamten Laminates bei 425 nm bestimmt. In einer Versuchreihe wurde die Menge des optischen Aufhellers variiert; TiO₂ war entweder anwesend oder abwesend. In Tabelle 3 sind die Ergebnisse zusammengestellt:

**Tabelle 3:**

| Reflexion bei 425 nm in Abhängigkeit verschiedener Druckfarbenzusammensetzungen | | | | |
|---|---|---|---|---|
| Menge optischer Aufheller [Gew. %] | TiO₂ | Reflexion (48er-Rasterwalze) | Reflexion (120er-Rasterwalze) | Anmerkungen |
| - | - | 9 % | 9 % | nur blankes Dekorpapier |
| 2 % | 15 % | 16,5 % | 13, 5 % | |
| 8 % | 15 % | 17,5 % | 14 % | |
| 15 % | 15 % | 19 % | 14,5 | |
| 30 % | 15 % | 21% | 17 % | |
| 30 % | - | 14 % | 12, 5 % | |

Die Ergebnisse belegen das synergistische Zusammenwirken des optischen Aufhellers mit dem Licht streuenden Pigment. Durch die Verwendung eines optischen Aufhellers alleine wird ein Effekt erzielt. Durch den Zusatz eines Licht streuenden Pigmentes wird der Effekt aber deutlich erhöht. Deutliche Effekte werden selbst dann erzielt, wenn nur geringe Mengen des optischen Aufhellers eingesetzt werden.

## Patentansprüche

1. Lumineszierende Flexodruckfarbe zum Drucken von Steuermarkierungen mindestens umfassend ein Lösemittel oder ein Lösemittelgemisch, mindestens ein polymeres Bindemittel sowie optional weitere Additive, **dadurch gekennzeichnet, dass** die Druckfarbe weiterhin mindestens ein Licht streuendes Pigment und mindestens einen optischen Aufheller in Kombination miteinander umfasst, mit der zusätzlichen Maßgabe, dass die Druckfarbe nicht deckend ist.

2. Flexodruckfarbe nach Anspruch 1, **dadurch gekennzeichnet, dass** es sich bei dem Pigment um ein Weißpigment handelt.

3. Flexodruckfarbe nach Anspruch 2, **dadurch gekennzeichnet, dass** es sich bei dem Weißpigment um ein TiO₂-Pigment handelt.

4. Flexodruckfarbe nach einem der Ansprüche 1 bis 3, **dadurch gekennzeichnet, dass** es sich bei dem Lösemittel um Wasser oder um ein überwiegend wässriges Lösemittelgemisch handelt.

5. Flexodruckfarbe nach einem der Ansprüche 1 bis 4, **dadurch gekennzeichnet, dass** es sich bei mindestens einem der polymeren Bindemittel um Casein oder Derivate davon handelt.

6. Verwendung einer Flexodruckfarbe nach einem der Ansprüche 1 bis 5 zum Drucken von Steuermarkierungen und Barcodes.

7. Verwendung einer Flexodruckfarbe nach einem der Ansprüche 1 bis 5 zur Herstellung von Dekorpapieren.

8. Verwendung einer Flexodruckfarbe nach einem der Ansprüche 1 bis 5 zur Herstellung von Holzlaminaten und Paneelen.

9. Verfahren zur Herstellung von Paneelen umfassend die folgenden Schritte:
(a) Herstellen eines Dekorpapieres mit aufgedruckten Steuermarkierungen,
(b) Verarbeiten des Dekorpapieres mit Tränkharzen zu Holzlaminaten, sowie
(c) Zerteilung der Holzlaminate zu Paneelen mittels Vielblattsägen,
**dadurch gekennzeichnet, dass** man zum Drucken der Steuermarkierungen eine lamineszierende Flexodruckfarbe gemäß einem der Ansprüche 1 - 5 verwendet, wobei die Sägevorrichtung mit Lamineszenzdetektoren ausgestattet ist und mit den erhaltenen Signalen der Sägetische zur Ausrichtung des Sägeschnitts gesteuert wird.
